# EUROPÄISCHE PATENTSCHRIFT

(11) **EP 1 842 466 B1**
(45) Veröffentlichungstag und Bekanntmachung des Hinweises auf die Patenterteilung: **24.12.2008**
(21) Anmeldenummer: 07103492.0
(22) Anmeldetag: 05.03.2007
(51) Int. Cl.: A47J 31/08

(54) **Filtereinsatz und Verfahren zur Herstellung von tütenartigen Filtereinsätzen**
Filter inlay and method for manufacturing bag-like filter inlays
Elément filtrant et procédé de fabrication

(30) Priorität: 07.04.2006 DE 102006016415
(43) Veröffentlichungstag der Anmeldung: 10.10.2007
(73) Patentinhaber: MELITTA HAUSHALTSPRODUKTE GmbH & Co. Kommanditgesellschaft, D-32427 Minden (DE)
(72) Erfinder: Müller, Georg, 32425 Minden (DE)
(74) Vertreter: Dantz, Jan Henning

(56) Entgegenhaltungen:
- EP-A- 1 210 891
- EP-A1- 1 172 054
- WO-A-02/15759
- FR-A- 2 832 047

## Beschreibung

Die vorliegende Erfindung betrifft einen Filtereinsatz, insbesondere zum Brühen von Kaffee, mit einem tütenartigen Filterkörper, der einen Boden, Seitenwände und eine Öffnung zur Befüllung mit einem Extraktionsmaterial aufweist, so wie ein Verfahren zur Herstellung von tütenartigen Filtereinsätzen.

Zum Brühen von Kaffee sind tütenartige Filterpapiereinsätze bekannt, die mit Kaffeemehl befüllt werden können und am Boden und an einer Seitenkante mit Prägenähten verschlossen sind, um das Filterpapier randseitig fest miteinander zu verbinden. An dem Filterpapier können ferner Prägungen vorhanden sein, beispielsweise zu Werbezwecken, wobei diese Prägungen meist nur schlecht sichtbar sind.

Ferner wurden Versuche unternommen, aromatisierte Filtereinsätze herzustellen, was sich jedoch als schwierig erwiesen hat, diese Filtereinsätze im Nassauftragsverfahren herzustellen.

Aus der EP 1172054 ist ein Verfahren zur Herstellung von Filterpapiereinsätzen bekannt, bei dem die Filterpapiereinsätze einer Filtermaterialbahn herausgeschnitten werden, wobei an einem Boden und einer Seitenwand des Filterpapiereinsatzes eine doppelte Prägenaht hergestellt wird. Neben der Filtereigenschaft weisen diese bekannten Filterpapiereinsätze keine weiteren Funktionalitäten auf.

Aus der WO 02/15759 ist ein Filtereinsatz bekannt, in dem ein Streifen angeordnet ist. Dieser Streifen kann Markierungen zur Anzeige der Füllmenge aufweisen.

Es ist daher Aufgabe der vorliegenden Erfindung einen Filtereinsatz sowie ein Verfahren zur Herstellung von tütenartigen Filtereinsätzen zu schaffen, mittels denen der Filtereinsatz eine weitere Funktionalität aufweist.

Diese Aufgabe wird mit einem Filtereinsatz mit den Merkmalen des Anspruches 1 sowie einem Verfahren zur Herstellung von tütenartigen Filtereinsätzen mit den Merkmalen des Anspruches 9 gelöst.

Ein erfindungsgemäßer Filtereinsatz weist einen Filterkörper auf, in dem mindestens ein Streifen mit Markierungen und/oder Aromastoffen angeordnet ist. Dadurch kann der Filtereinsatz neben seiner Filterfunktion noch weitere Funktionen bereitstellen, in dem der Streifen in dem Filterkörper dem Benutzer brauchbare Informationen gibt, beispielsweise hinsichtlich der Füllmenge des Filtereinsatzes oder es können Aromastoffe vorgesehen sein, die dem gefilterten Fluid, vorzugsweise gebrühten Kaffee, eine besondere geschmackliche Note verleihen. Für eine einfache Herstellung des Filtereinsatzes ist der Streifen an einer Prägenaht des Filterkörpers fixiert.

Beabstandet von der Prägenaht kann der Streifen dabei lose in dem Filterkörper angeordnet sein. Dies ermöglicht auch eine einfache Entfernung des Streifens aus dem Filterkörper, sofern der Benutzer die gewünschte Funktion in besonderen Fällen nicht nutzen will, beispielsweise wenn der Streifen aromatisiert ist und dieses nicht gewünscht ist. Durch die lose Anordnung innerhalb des Filterkörpers ist der Streifen zudem gut sichtbar und hebt sich von dem Material des Filtereinsatzes ab.

Gemäß einer bevorzugten Ausführungsform der Erfindung weist der Streifen eine Markierung zur Erfassung der Füllmenge auf. Dabei können die Markierungen auch konkrete Mengenangaben hinsichtlich des Volumens oder des Gewichtes darstellen, wobei vorzugsweise die Markierungen dem Benutzer einen Hinweis geben, wie viele Tassen Kaffee bei einer entsprechenden Befüllung mit Kaffeemehl gebrüht werden können.

Gemäß einer weiteren Ausgestaltung der Erfindung ist der Streifen mit einem Aromastoff versehen. Der Aromastoff kann dabei mit einer Schutzschicht überzogen sein, die sich bei Kontakt mit einer Flüssigkeit, vorzugsweise heißem Wasser, löst. Dann kann der Aromastoff lange sein Aroma behalten, da er geschützt unterhalb der Schutzschicht angeordnet ist und nur während eines Brühvorganges an das umgebende Fluid abgegeben wird.

Für eine gute Sichtbarkeit des Streifens ist dieser vorzugsweise in einer anderen Farbe ausgestaltet als das Filtermaterial. Dadurch wird der Streifen vom Benutzer sofort erkannt, wobei dieser auch von außen durch das Material hindurch sichtbar sein kann. Insbesondere wenn als Filtermaterial Filterpapier eingesetzt wird.

Bei dem erfindungsgemäßen Verfahren zur Herstellung von tütenartigen Filtereinsätzen wird eine Materialbahn gefördert und dann mindestens ein Streifen aufgelegt. Anschließend wird die Filtermaterialbahn gefaltet, so dass der mindestens eine Streifen zwischen der gefalteten Materialbahn angeordnet ist. Dann wird die gefaltete Materialbahn geschnitten und geprägt, um den Filtereinsatz herzustellen. Das Herstellungsverfahren kann somit ohne wesentlichen Mehraufwand durchgeführt werden, wobei durch den Streifen innerhalb des Filtereinsatzes eine zusätzliche Funktionalität bereitgestellt wird, sowie dies oben mit Bezug auf den Filtereinsatz erläutert wurde.

Bei dem Verfahren wird die Filtermaterialbahn so geprägt, dass der mindestens eine Streifen an einer Prägenaht des Filtereinsatzes festgelegt wird. Dabei erstreckt sich der Streifen vorzugsweise parallel zu einer Faltkante der Filtermaterialbahn, so dass die Förderrichtung der Filtermaterialbahn und des Streifens gleich sind und hohe Geschwindigkeiten gefahren werden können.

Die Erfindung wird nachfolgend anhand eines Ausführungsbeispieles mit Bezug auf die beigefügten Zeichnungen näher erläutert. Es zeigen:

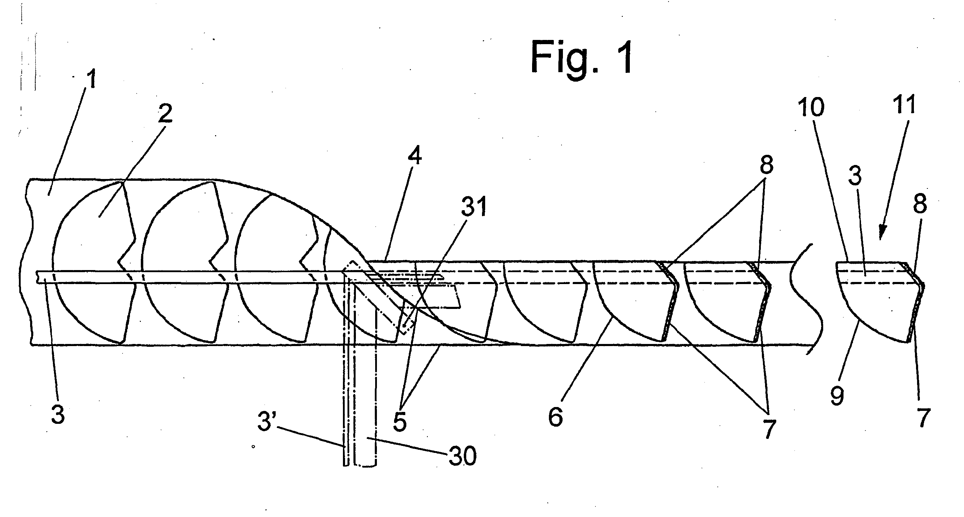

- Figur 1: Eine schematische Ansicht eines Verfahrens zur Herstellung von tütenartigen Filtereinsätzen, und
- Figur 2: eine Ansicht eines erfindungsgemäßen Filtereinsatzes.

Eine Filtermaterialbahn 1, vorzugsweise aus Filterpapier oder einem Vliesstoff wird in eine Richtung gefördert und besitzt etwa die Breite eines Rohlings 2, aus dem später ein Filtereinsatz hergestellt wird. Es ist auch möglich, die Filtermaterialbahn 1 breiter auszugestalten, so dass zwei Rohlinge 2 nebeneinander angeordnet sein können. Parallel zu der Filtermaterialbahn 1 wird ein Streifen 3 außer mittig aufgelegt. Die Rohlinge 2 sind in der Filtermaterialbahn 1 nur eingezeichnet, damit das Herstellungsverfahren besser erläutert werden kann. Es ist allerdings auch möglich, zumindest einen Teil der Schnittkontur des Rohlings 2 schon vorzusehen, insbesondere wenn eine Öffnungshilfe an dem Filtereinsatz vorgesehen werden soll.

In einem nächsten Schritt wird die Filtermaterialbahn 1 gefaltet, so dass sich mittig eine Faltkante 5 ausbildet und die Filtermaterialbahn 1 mit Kanten 5 aufeinander gelegt wird. Dadurch ist der Streifen 3 in der gefalteten Filtermaterialbahn aufgenommen.

Es ist auch möglich, einen oder mehrere Streifen 3' und 30 seitlich in die Filtermaterialbahn einzuführen. Hierfür ist vor der Faltung der Filtermaterialbahn 1 eine Umlenkrolle 31 etwa in einem Winkel 45° zur Bewegungsrichtung der Filtermaterialbahn 1 angeordnet, um den oder die zugeführten Streifen 3' und/oder 30 von der Seite oder von oben zuzuführen. Die Streifen 3' und 30 können unterschiedliche Breite und Funktionen besitzen.

Anschließend wird die so gefaltete Filtermaterialbahn geprägt und geschnitten, wobei an der Seitenkante eine Prägenaht 7 und am Boden eine Prägenaht 8 zur Verbindung des Filtermaterials vorgesehen sind, und gegenüberliegend vom Boden eine Schnittkante 6 vorgesehen ist. Benachbart zu den Prägenähten 7 und 8 wird ebenfalls geschnitten, so dass ein fertiger Filtereinsatz 11 hergestellt wird, der eine Öffnung 9 zum Befüllen mit einem zu filternden Material aufweist. Dabei ist ein Filterkörper gebildet, der eine seitliche Prägenaht 7, am Boden eine Prägenaht 8 sowie eine seitliche Faltkante 10 aufweist. In dem Filterkörper ist beabstandet zu der Faltkante 10 ein Streifen 3 angeordnet der die Funktionalität des Filtereinsatzes 11 erhöht.

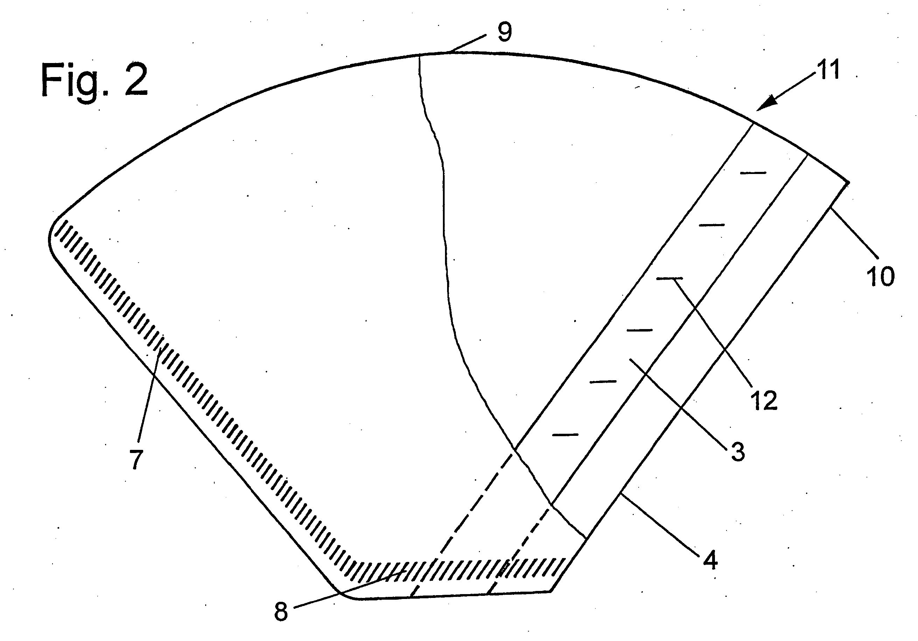

Wie in Figur 2 zu sehen ist, sind an dem Streifen 3 Markierungen 12 vorgesehen, die dem Benutzer einen Hinweis geben können, welche Füllmenge innerhalb des Filterkörpers aufgenommen ist. Zudem können die Markierungen 12 auch so gestaltet sein, dass der Benutzer sieht, welche Menge an Kaffeemehl notwendig ist, um eine bestimmte Anzahl von Tassen Kaffee zu brühen. Der Streifen 3 kann dabei gut sichtbar in dem Filterkörper aufgenommen sein, insbesondere kann er farblich von dem umgebenden Filtermaterial abgesetzt sein. Wenn beispielsweise als Filtermaterial weißes Filterpapier eingesetzt wird, kann der Streifen 3 aus braunen Filterpapier bestehen. Dann ist für den Benutzer der Streifen 3 sofort beim Öffnen des Filterkörpers sichtbar und schimmert zudem auch von außen durch. Der Streifen 3 kann aus dem Filtermaterial oder einem anderen Material bestehen. Ferner kann der Streifen 3 für die Markierungen 12 bedruckt und/oder geprägt sein.

Der Streifen 3 ist an der Prägenaht 8 am Boden des Filtereinsatzes 11 festgelegt und ist ansonsten lose zwischen den beiden Lagen des Filtermaterials aufgenommen. Es ist allerdings auch möglich, den Streifen 3 zusätzlich an dem Filtermaterial zu verkleben.

Gemäß einer bevorzugten Ausgestaltung kann der Streifen 3 mit ein oder mehreren Aromastoffen versehen sein, die auch mit einer Schutzschicht überzogen sind, so dass die Aromastoffe lange frisch bleiben. Die Schutzschicht kann dabei wasserlöslich ausgebildet sein, damit sich beim Brühen von Kaffee die Schutzschicht löst und die Aromastoffe abgegeben werden können. Sofern der Streifen 3 dabei nur an der Prägenaht 7 bzw. 8 festgelegt ist, kann dieser bei Bedarf auch ganz oder teilweise entfernt werden, beispielsweise zur Dosierung der Aromastoffe.

In dem gezeigten Ausführungsbeispiel ist ein Streifen 3 an der Prägenaht am Boden festgelegt und innerhalb des Filterkörpers aufgenommen. Zudem kann ein breiterer Streifen an einer seitlichen Prägenaht 7 festgelegt sein, wobei dieser Streifen ebenfalls Markierungen, Aromastoffe etc. aufweisen kann, so wie dies ebenfalls Markierungen, Aromastoffe etc. aufweisen kann, so wie dies oben beschreiben wurde.

Es ist natürlich möglich, ein oder mehrere Streifen 3 bzw. 30 in dem Filterkörper vorzusehen, wobei diese dann an unterschiedlichen Stellen mit der Prägenaht 7 und/oder 8 verbunden sein können.

Statt einer Festlegung des Streifens 3 an der Prägenaht 8 im Bodenbereich kann der Streifen 3 auch an der Prägenaht 7 eher seitlich fixiert sein. Dadurch kann der Streifen 3 auch kürzer ausgebildet sein.

## Patentansprüche

1. Filtereinsatz (11), insbesondere zum Brühen von Kaffee, mit einem tütenartigen Filterkörper, der einen Boden, Seitenwände und eine Öffnung (9) zur Befüllung mit einem Extraktionsmaterial, wobei in dem Filterkörper mindestens ein Streifen (3) mit Markierungen (12) und/oder Aromastoffen angeordnet ist, **dadurch gekennzeichnet, dass** der Streifen (3) an einer Prägenaht (7, 8) des Filterkörpers fixiert ist.

2. Filtereinsatz nach Anspruch 1, **dadurch gekennzeichnet, dass** der Streifen (3) beabstandet von der Prägenaht (7, 8) lose in dem Filterkörper angeordnet ist.

3. Filtereinsatz nach einem der Ansprüche 1 oder 2, **dadurch gekennzeichnet, dass** an dem Streifen (3) Markierungen (12) zur Erfassung der Füllmenge angeordnet sind.

4. Filtereinsatz nach Anspruch 3, **dadurch gekennzeichnet, dass** die Markierungen (12) eine Angabe darstellen, wie viele Tassen Kaffee bei einer entsprechenden Befüllung mit Kaffeemehl gebrüht werden können.

5. Filtereinsatz nach einem der Ansprüche 1 bis 4, **dadurch gekennzeichnet, dass** der Streifen (3) mit einem Aromastoff versehen ist.

6. Filtereinsatz nach Anspruch 5, **dadurch gekennzeichnet, dass** der Aromastoff mit einer Schutzschicht überzogen ist, die sich bei Kontakt mit einer Flüssigkeit löst.

7. Filtereinsatz nach einem der Ansprüche 1 bis 6, **dadurch gekennzeichnet, dass** der Streifen (3) eine andere Farbe als Filtermaterial aufweist.

8. Filtereinsatz nach einem der Ansprüche 1 bis 7, **dadurch gekennzeichnet, dass** der Filtereinsatz aus Filterpapier hergestellt ist.

9. Verfahren zur Herstellung von tütenartigen Filtereinsätzen (11) mit den folgenden Schritten:
- Fördern einer Filtermaterialbahn (1) und Auflegen mindestens eines Streifens (3) auf die Filtermaterialbahn,
- Falten der Filtermaterialbahn (1), so dass der mindestens eine Streifen (3) zwischen der gefalteten Filtermaterialbahn angeordnet ist und
- Schneiden und Prägen der gefalteten Filtermaterialbahn (1) zur Herstellung eines Filtereinsatzes (11),
wobei
beim Prägen der Filtermaterialbahn (1) der mindestens eine Streifen (3) an eine Prägenaht (7, 8) des Filtereinsatzes (11) festgelegt wird.

10. Verfahren nach Anspruch 9 oder 10, **dadurch gekennzeichnet, dass** der mindestens eine Streifen (3) parallel zu einer Faltkante (4) der Filtermaterialbahn (1) zugeführt wird.

## Claims

1. Filter insert (11), in particular for brewing coffee, having a bag-like filter body which has a base, side walls and an opening (9) for filling with an extraction means, with at least one strip (3) with markings (12) and/or flavouring agents being arranged in the filter body, **characterized in that** the strip (3) is fixed to an embossed seam (7, 8) of the filter body.

2. Filter insert according to Claim 1, **characterized in that** the strip (3) is arranged loosely in the filter body at a distance from the embossed seam (7, 8).

3. Filter insert according to either of Claims 1 and 2, **characterized in that** markings (12) for detecting the fill quantity are arranged on the strip (3).

4. Filter insert according to Claim 3, **characterized in that** the markings (12) give an indication of how many cups of coffee can be brewed given corresponding filling with ground coffee.

5. Filter insert according to one of Claims 1 to 4, **characterized in that** the strip (3) is provided with a flavouring agent.

6. Filter insert according to Claim 5, **characterized in that** the flavouring agent is covered with a protective layer which dissolves on contact with a liquid.

7. Filter insert according to one of Claims 1 to 6, **characterized in that** the strip (3) is a different colour to the filter material.

8. Filter insert according to one of Claims 1 to 7, **characterized in that** the filter insert is produced from filter paper.

9. Method for producing bag-like filter inserts (11), comprising the following steps:
- conveying a filter material web (1) and applying at least one strip (3) to the filter material web,
- folding the filter material web (1) so that the at least one strip (3) is arranged between the folded filter material web, and
- cutting and embossing the folded filter material web (1) in order to produce a filter insert (11),
with the at least one strip (3) being fixed to an embossed seam (7, 8) of the filter insert (11) when the filter material web (1) is embossed.

10. Method according to Claim 9, **characterized in that** the at least one strip (3) is supplied parallel to a folding edge (4) of the filter material web (1).

## Revendications

1. Filtre (11), en particulier pour l'infusion de café, avec un corps de filtre en forme de pochette comportant un fond, des parois latérales et une ouverture (9) pour le remplissage avec un produit d'extraction, où au moins un ruban (3) avec des marques (12) et/ou des substances aromatiques est disposé dans le corps de filtre, **caractérisé en ce que** le ruban (3) est fixé sur une liaison par gaufrage (7, 8) du corps de filtre.

2. Filtre selon la revendication 1, **caractérisé en ce que** le ruban (3) est séparément disposé dans le corps de filtre, à intervalle de la liaison par gaufrage (7, 8).

3. Filtre selon l'une des revendications 1 ou 2, **caractérisé en ce que** des marques (12) sont disposées sur le ruban (3) pour la saisie du niveau de remplissage.

4. Filtre selon la revendication 3, **caractérisé en ce que** les marques (12) fournissent une indication du nombre de tasses de café pouvant être infusées en cas de remplissage correspondant avec du café moulu.

5. Filtre selon l'une des revendications 1 à 4, **caractérisé en ce que** le ruban (3) est pourvu d'une substance aromatique.

6. Filtre selon la revendication 5, **caractérisé en ce que** la substance aromatique est revêtue d'une couche protectrice qui se dissout au contact avec un liquide.

7. Filtre selon l'une des revendications 1 à 6, **caractérisé en ce que** le ruban (3) est d'une autre couleur que la matière du filtre.

8. Filtre selon l'une des revendications 1 à 7, **caractérisé en ce que** le filtre est fabriqué en papier filtrant.

9. Procédé de fabrication de filtres (11) en forme de pochette, comprenant les étapes suivants :
- transport d'une bande de matière filtrante (1) et application d'au moins un ruban (3) sur la bande de matière filtrante,
- pliage de la bande de matière filtrante (1) de manière que la ou les rubans (3) soient disposés dans la bande de matière filtrante pliée, et
- découpe et gaufrage de la bande de matière filtrante (1) pliée pour obtenir un filtre (11),
où le ou les rubans (3) sont fixés sur une liaison par gaufrage (7, 8) du filtre (11) lors du gaufrage de la bande de matière filtrante (1).

10. Procédé selon la revendication 9, **caractérisé en ce que** la ou les rubans (3) sont guidés parallèlement à un bord de pliage (4) de la bande de matière filtrante (1).
